# EUROPÄISCHE PATENTSCHRIFT

(11) **EP 3 208 145 B1**
(45) Veröffentlichungstag und Bekanntmachung des Hinweises auf die Patenterteilung: **16.10.2019**
(21) Anmeldenummer: 16203945.7
(22) Anmeldetag: 14.12.2016
(51) Int. Cl.: B60P 7/08, B62J 7/08, A44B 11/12

(54) **UMLEG-SCHNALLE**
TRANSFER BUCKLE
BOUCLE DE RETOURNEMENT

(30) Priorität: 14.12.2015 DE 102015121725; 28.01.2016 DE 102016101531
(43) Veröffentlichungstag der Anmeldung: 23.08.2017
(73) Patentinhaber: Gita Aviation (Changzhou) Co. Ltd., Changzhou Jiangsu (CN)
(72) Erfinder: Bahety, Ashok, 61440 Oberursel (DE); Redak, Franz, 3443 Sieghartskirhcen (AT); Pöpperl, Georg, 7000 Eisenstadt (AT); Sharma, Nalin, Changzhou, Jiangsu (CN)
(74) Vertreter: Manasse, Uwe

(56) Entgegenhaltungen:
- EP-A2- 0 369 698
- CN-A- 104 648 219
- GB-A- 2 444 152
- US-A1- 2011 041 301
- US-B1- 7 004 695

## Beschreibung

Die vorliegende Erfindung betrifft eine Umleg-Schnalle (insbesondere Overcenter Buckle (OCB)) zur Sicherung von Ladung in Flugzeugen, aber auch beim Transport auf Straßen und auf dem Wasser mittels Spanngurte (tie down straps) bzw. Ladungssicherungsgurte (cargo restraint straps). Sie wird als Spanneinrichtung bei den Gurten eingesetzt. Derartige Umleg-Schnallen bzw. Gurte mussten früher keine Sicherheitsanforderungen erfüllen. Heutzutage gelten die Anforderungen gemäß EASA ETSO-C172, welche die Anforderungen in SAE (Society of Automobile Engineers) AS (Aerospace Standard) 5385 Rev. C zum Großteil referenziert. Die Einführung des neuen Standards brachte den Cyclic Load Test mit sich. Dieser simuliert einen Flug in unruhiger Luft. Bei diesem Test wird die Umleg-Schnalle (OCB) 100 Lastspielen mit 40 % (5,9 kN) der Limit Load (14,8 kN) mit einer Frequenz von ca. 1 Hz ausgesetzt. Dabei darf es nur zu begrenztem Schlupf (max. 13 mm) kommen. An dieser Anforderung sind die bisherigen Umleg-Schnallen gescheitert.

CN 104 648 219 A offenbart eine Umleg-Schnalle, umfassend einen Schnallenkörper mit voneinander beabstandeten Seitenwänden, eine Schwenkachse, die sich zwischen den Seitenwänden des Schnallenkörpers erstreckt, und ein Handhabungsteil mit einem Stangenelement und einem Paar Aufnahmelöchern, wobei die Aufnahmelöcher konfiguriert sind, die Schwenkachse aufzunehmen, um das Handhabungsteil mit dem Schnallenkörper so in Eingriff zu bringen, dass das Handhabungsteil zwischen einer geöffneten Position, in der ein Gurt durch einen Spalt mit einer Spaltbreite zwischen der Schwenkachse und dem Stangenelement in das Handhabungsteil eingefädelt werden kann, und einer geschlossenen Position, in der Spannung auf den in das Handhabungsteil eingefädelten Gurt ausgeübt werden kann, schwenkbar ist. Der vorliegenden Erfindung liegt somit die Aufgabe zugrunde, eine Umleg-Schnalle bereitzustellen, die den Anforderungen gemäß dem neuen Standard entspricht.

Erfindungsgemäß wird diese Aufgabe gelöst durch eine Umleg-Schnalle, umfassend einen Schnallenkörper mit voneinander beabstandeten Seitenwänden, eine Schwenkachse, die sich zwischen den Seitenwänden des Schnallenkörpers erstreckt, und ein Handhabungsteil mit einem Stangenelement, das einen mittleren Bereich mit einem kreisrunden Querschnitt aufweist, und einem Paar Aufnahmelöchern, wobei die Aufnahmelöcher konfiguriert sind, die Schwenkachse aufzunehmen, um das Handhabungsteil mit dem Schnallenkörper so in Eingriff zu bringen, dass das Handhabungsteil zwischen einer geöffneten Position, in der ein Gurt durch einen Spalt mit einer Spaltbreite s2 zwischen der Schwenkachse und dem Stangenelement in das Handhabungsteil eingefädelt werden kann, und einer geschlossenen Position, in der Spannung auf den in das Handhabungsteil eingefädelten Gurt ausgeübt werden kann, schwenkbar ist, wobei ein Spiel zwischen der Schwenkachse und dem Handhabungsteil in der geschlossenen Position besteht und die Schwenkachse exzentrisch angeordnete Lagerenden aufweist, um in der geschlossenen Position, in der der Spalt zwischen der Schwenkachse und dem Stangenelement eine Spaltbreite s1 aufweist, wobei die Spaltbreite s1 kleiner als die Spaltbreite s2 ist, eine Klemmung des Gurtes zwischen der Schwenkachse und dem Stangenelement zu bewirken.

Vorteilhafterweise entspricht die Spaltbreite s1 der Dicke des Gurtes im gepressten Zustand und/oder vorteilhafterweise sollte das Spiel zwischen Schwenkachse und Handhabungsteil berücksichtigt werden.

Insbesondere kann vorgesehen sein, dass das Stangenelement eine mit einem, insbesondere dreidimensionalen, Muster versehene Oberfläche aufweist.

Gemäß einer besonderen Ausfuhrungsform der vorliegenden Erfindung kann das Muster durch eine spanabhebende Bearbeitung, insbesondere Fräsen, hergestellt sein.

Alternativ kann das Muster durch eine spanlose Bearbeitung, insbesondere Umformen, wie z. B. Kaltumformen, hergestellt sein.

Vorteilhafterweise ist das Muster eine Rändelung.

Insbesondere kann vorgesehen sein, dass die Rändelung eine Kreuzrändelung ist.

Dabei kann vorgesehen sein, dass die Rändelung eine Kreuzrändelung unter einem Winkel im Bereich von ca. 30° bis ca. 60° und besonders bevorzugt unter einem Winkel α von 45° zur Längsachse des Stangenelements ist.

Weiterhin kann dabei vorgesehen sein, dass die Kreuzrändelung Kästchen mit einer Seitenlänge s im Bereich von ca. 1 mm bis ca. 2 mm, bevorzugt von 1,5 mm aufweist.

Gemäß einer weiteren besonderen Ausführungsform der vorliegenden Erfindung kann die Rändelung Riefen, die einen Profilwinkel β, der im Bereich von ca. 60° bis ca. 120°, bevorzugt im Bereich von ca. 80° bis ca. 100° liegt und am bevorzugtesten ca. 90° beträgt, und/oder eine Tiefe t, die im Bereich von ca. 0,2 mm bis ca. 1 mm, bevorzugter im Bereich von ca. 0,3 mm bis ca. 0,8 mm und am bevorzugtesten ca. 0,5mm beträgt, aufweisen.

Zweckmäßigerweise weist die Rändelung eine Teilung auf, die im Bereich von ca. 1 mm bis ca. 2 mm, bevorzugter im Bereich von ca. 1,2 mm bis ca. 1,8 mm und am bevorzugtesten im Bereich von ca. 1,5 mm bis ca. 1,6 mm liegt.

Schließlich kann vorgesehen sein, dass die Rändelung erhöhte oder vertiefte Spitzen aufweist.

Der vorliegenden Erfindung liegt die überraschende Erkenntnis zugrunde, dass durch die exzentrische Gestaltung der Schwenkachse ein Gurtbandschlupf ausreichend verhindert werden kann, sodass der resultierende Spanngurt/Ladungssicherungsgurt bzw. die Umleg-Schnalle die Anforderungen gemäß dem neuen Standard FAA (Federal Aviation Administration) TSO oder EASA (European Aviation Safety Agency) ETSO C172 erfüllt. Durch ein Muster kann die Reibung erhöht werden.

Die Schwenkachse ist exzentrisch gestaltet, um die Spannung des Gurtes zu erhöhen und/oder eine Klemmung des Gurtes zwischen Schwenkachse und Stangenelement in der geschlossenen Position zu ermöglichen.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im Einzelnen erläutert wird. Dabei zeigt:
- Figur 1a: eine perspektivische Ansicht (oben; ohne Gurt) sowie eine Schnittansicht (unten; mit Gurt) entlang der Linie A-A von einer Umleg-Schnalle gemäß einer besonderen Ausführungsform der vorliegenden Erfindung in einer geschlossenen Position;
- Figur 1b: eine perspektivische Ansicht (oben; ohne Gurt) sowie eine Schnittansicht (unten; mit Gurt) entlang der Linie A-A von der Umleg-Schnalle von Figur 1 in einer geöffneten Position;
- Figur 2: eine Draufsicht der Umleg-Schnalle von Figur 1;
- Figur 3: eine Seitenansicht der Umleg-Schnalle von Figur 1;
- Figur 4: eine Vorderansicht der Umleg-Schnalle von Figur 1;

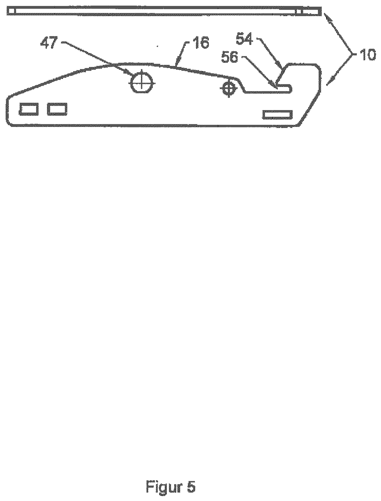

- Figur 5: eine Seitenansicht eines Schnallenkörpers der Umleg-Schnalle von Figur 1;
- Figur 6: eine perspektivische Ansicht eines Handhabungsteils der Umleg-Schnalle von Figur 1;

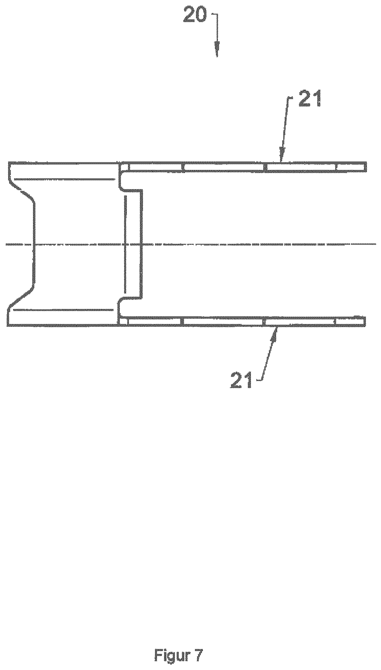

- Figur 7: eine Draufsicht des Handhabungsteils von Figur 6;
- Figur 8: eine Seitenansicht des Handhabungsteils von Figur 6;

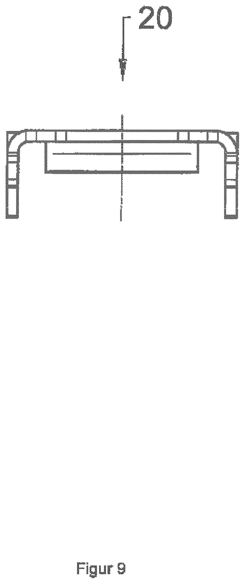

- Figur 9: eine Vorderansicht des Handhabungsteils von Figur 6;
- Figur 10: eine Draufsicht auf eine Schwenkachse der Umleg-Schnalle von Figur 1;
- Figur 11: eine weitere Draufsicht auf die Schwenkachse von Figur 10, wobei aber die Schwenkachse um 90 Grad um ihre Längsachse gedreht ist;
- Figur 12: eine Draufsicht auf ein Stangenelement der Umleg-Schnalle von Figur 1;
- Figur 13: Details der Gestaltung der Oberfläche des Stangenelements von Figur 12;
- Figur 14: eine Draufsicht einer Verriegelungseinrichtung der Umleg-Schnalle von Figur 1;
- Figur 15: eine Seitensicht der Verriegelungseinrichtung von Figur 14;
- Figur 16: eine Vorderansicht der Verriegelungseinrichtung von Figur 14;
- Figur 17: eine Draufsicht einer Rückplatte der Umleg-Schnalle von Figur 1;
- Figur 18: eine Vorderansicht der Rückplatte von Figur 17;
- Figur 19: eine Seitenansicht der Rückplatte von Figur 17;
- Figur 20: eine Seitenansicht von einem Kantenschutz der Umleg-Schnalle von Figur 1;
- Figur 21: eine Feder der Umleg-Schnalle von Figur 1 in Seitenansicht; und
- Figur 22: eine Draufsicht einer Frontplatte der Umleg-Schnalle von Figur 1.

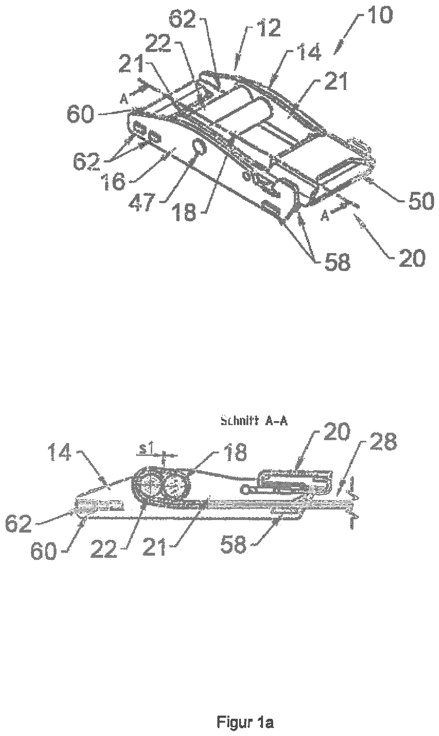

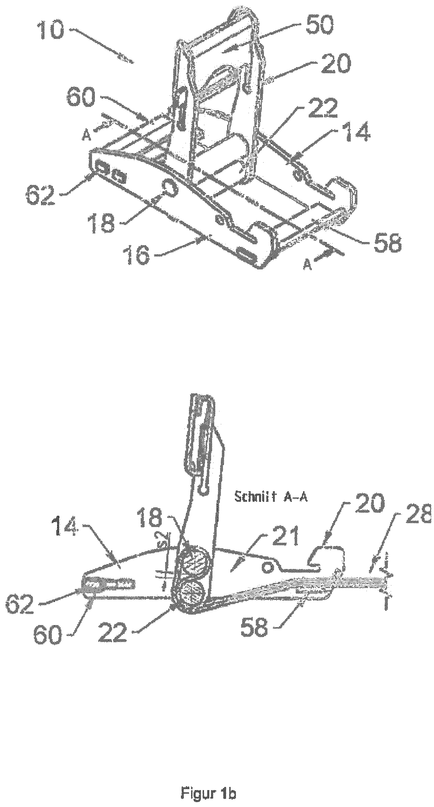

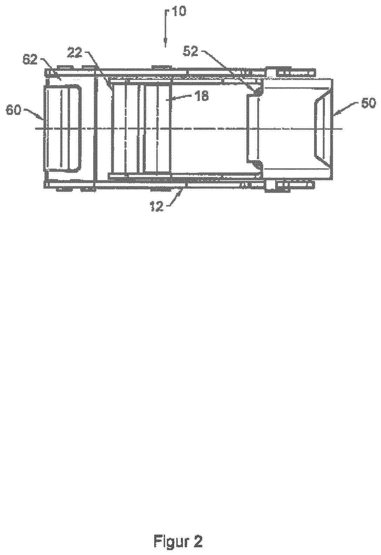

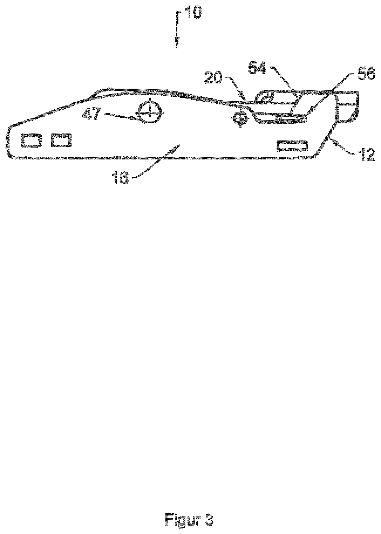

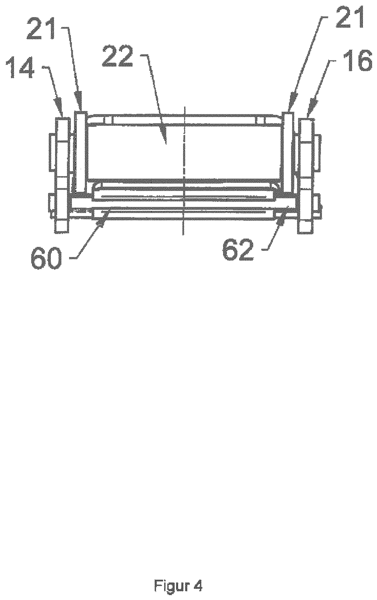

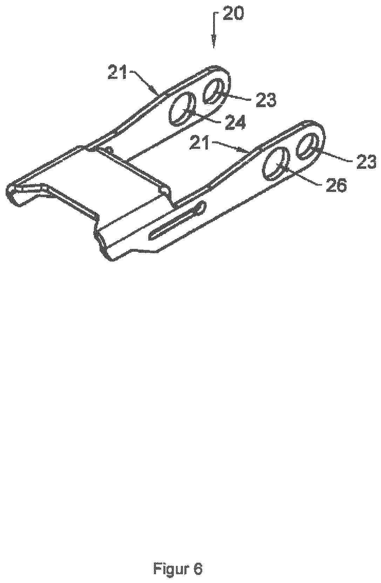

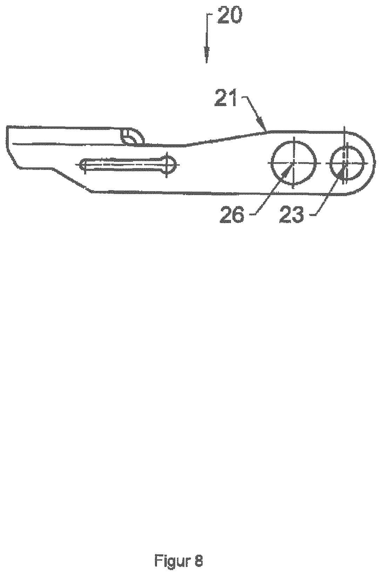

Figuren 1 bis 4 zeigen eine Umleg-Schnalle (Overcenter Buckle) 10 gemäß einer besonderen Ausführungsform der vorliegenden Erfindung. Diese umfasst einen Schnallenkörper 12 mit zwei voneinander beanstandeten Seitenwänden 14 und 16, eine Schwenkachse 18, die sich zwischen den Seitenwänden 14 und 16 erstreckt, und ein Handhabungsteil 20, das auch als ein Hebel oder Griff bezeichnet werden kann, mit einem Stangenelement 22 und einem Paar Aufnahmelöchern 24 und 26 (siehe insbesondere Figuren 6 und 8) für die Schwenkachse 18. Die Aufnahmelöcher 24 und 26 sind konfiguriert, um die Schwenkachse 18 aufzunehmen bzw. hindurchzulassen, um das Handhabungsteil 20 mit dem Schnallenkörper 12 so in Eingriff zu bringen, dass das Handhabungsteil 20 zwischen einer geöffneten Position (siehe Figur 1b), in der ein Gurt 28 in das Handhabungsteil 20 eingefädelt werden kann, und einer geschlossenen Position (siehe Figur 1b), in der Spannung auf den in das Handhabungsteil 20 eingefädelten Gurt 28 (siehe Figur 1a unten) ausgeübt werden kann oder ausgeübt wird, schwenkbar ist. Das Handhabungsteil 20 weist zwei Seitenwände 21, 21, auf und das Stangenelement 22 erstreckt sich zwischen den Seitenwänden 21, 21 wobei dessen Enden in Aufnahmelöchern 23, 23 (siehe insbesondere Figuren 6 und 8) in den Seitenwänden 21, 21 aufgenommen sind, und verläuft parallel, aber versetzt, zur Schwenkachse 18. Wenn das Handhabungsteil 20 um die Schwenkachse geschwenkt wird, bewegt sich das Stangenelement 22 auf einer Kreisbahn um die Schwenkachse 12.

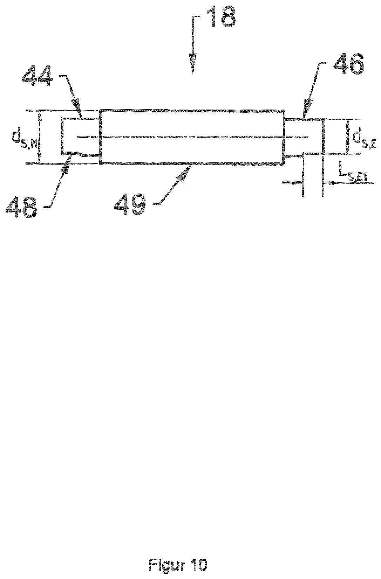

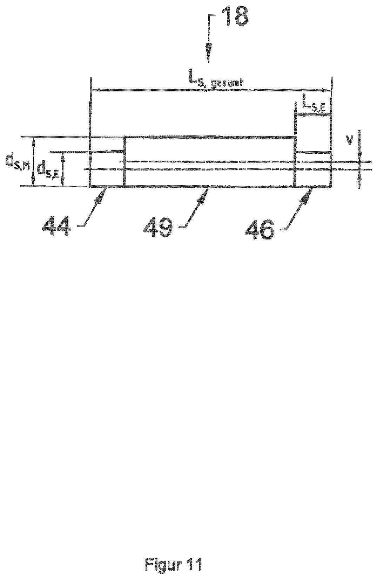

Die Spaltbreite s1 des Spalts zwischen der Schwenkachse 18 und dem Stangenelement 22 in der geschlossenen Position entspricht in diesem Ausführungsbeispiel der Dicke des Gurtes 28 in gepresstem Zustand, wobei auch das Spiel zwischen der Schwenkachse 18 und dem Handhabungsteil 20 zu berücksichtigen ist. In der geöffneten Position weist der Spalt zwischen der Schwenkachse 18 und dem Stangenelement 22 eine Spaltbreite s2 auf, die um die Größe des Versatzes v (siehe Figur 11) und um die Hälfte der Differenz der Durchmesser d_{S,M} und d_{S,E} (siehe Figuren 10 und 11) größer als die Spaltbreite s1 ist, um ein leichteres Durchfädeln des Gurtes 28 zu ermöglichen. In einem Ausführungsbeispiel liegt der Versatz v zwischen der Mittelachse der beiden äußeren Enden 44 und 46 (auch Lagerenden genannt) der Schwenkachse 18 und der Mittelachse des mittleren Bereiches 49 der Schwenkachse 18 im Bereich von ca. 1 mm bis ca. 3 mm, bevorzugter im Bereich von ca. 1,5 mm bis ca. 2, 5 mm und am bevorzugtesten im Bereich von ca. 1,9 mm bis ca. 2,1 mm. Aufgrund des Versatzes v, der auch andere Dimensionen annehmen kann, sind die äußeren Enden 44 und 46 exzentrisch angeordnet und ist die Schwenkachse 18 exzentrisch gestaltet bzw. gelagert.

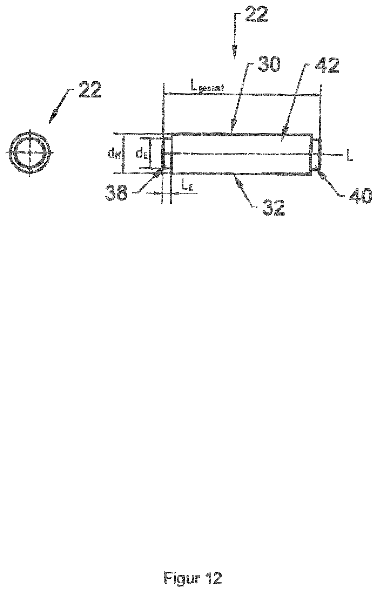

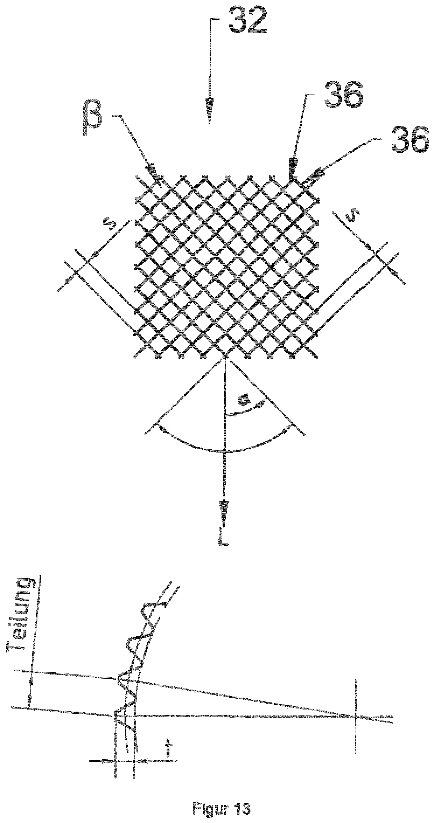

Wie sich insbesondere aus den Figuren 12 und 13 ergibt, weist die Oberfläche 30 des Stangenelements 22, die mit dem Gurt 28 in Berührung kommen kann, eine Kreuzrändelung 32 unter einem Winkel α von 45° zur Längsachse L des Stangenelements 22 auf.

Typischerweise wird der Gurt 28 einer Umleg-Schnalle in die Schnalle eingeführt, um die Schwenkachse gewickelt und entlang desselben Wegs zurück aus der Schnalle geführt. Dies bedeutet, dass der Gurt in der Schnalle im Wesentlichen als eine Einzelschicht aus Gurtmaterial vorliegt. Als eine Folge der Dicke von Gurtmaterial wird der Kanal typischerweise dieselbe Tiefe aufweisen oder etwas tiefer als die Dicke sein.

Die Kreuzrändelung besteht aus Kästchen 34 mit einer Seitenlänge s von 1,5 mm und einem Innenwinkel β von 90°. Die Riefen 36 weisen eine Tiefe von 0,5 mm auf. Die Gesamtlänge L_{gesamt} des Stangenelements 22 beträgt in diesem Beispiel 52 mm. Die beiden Enden 38 und 40 des Stangenelements 22 weisen einen kreisrunden Querschnitt wie der mittlere Bereich 42 des Stangenelements 22, aber mit einem geringeren Durchmesser auf.

Während der Durchmesser d_{M} des mittleren Bereichs 42 des Stangenelements 22 13 mm ± 0,2 mm beträgt, beträgt der Durchmesser d_{E} der Enden 38 und 40 nur 10 mm. Die äußeren Enden 38 und 40 mit dem geringeren Durchmesser d_{E} weisen eine Länge L_{E} von jeweils 3 mm auf.

Wie sich insbesondere aus den Figuren 10 und 11 ergibt, weist die Schwenkachse 18 eine Gesamtlänge L_{S},_{gesamt} von 63,5 mm auf. Die beiden äußeren Enden 44 und 46 der Schwenkachse 18 weisen einen geringeren Durchmesser d_{S}, _{E}, nämlich 9 bzw. 8,5 mm, als der Durchmesser d_{S, M,} nämlich 13 mm ± 0,2 mm auf. Vorzugsweise besteht zwischen den Durchmessern g_{S,M} und d_{S,E} eine Differenz ungleich 0. Diese kann beispielsweise im bestreich von ca. 3 mm bis ca. 5 mm, bevorzugter im Bereich vom ca. 3, 5 mm bis ca. 4, 5 mm und am bevorzugtesten im Bereich von ca. 3,9 mm bis ca. 4,1 mm liegen. Zudem weisen die äußeren Enden 44 und 46 jeweils eine Länge L_{S, E} von 9,25 mm auf, wobei, wie sich auch aus beispielsweise der Figur 1 ergibt, die äußeren Enden 44 und 46 nach außen hin über eine Länge L_{S}, _{E1} von 4,5 mm in Übereinstimmung mit entsprechenden Aufnahmelöchern 47 in den Seitenwänden 14 und 16 des Schnallenkörpers 12 nicht im Querschnitt kreisförmig, sondern mit einer Abplattung 48 versehen sind. Zudem sind die Enden 44 und 46 zur Mittelachse des mittleren Bereiches 49 um einen Versatz v versetzt.

Die in der Figur 11 obere Seite der Schwenkachse 18 ist in der geschlossenen Position zum Stangenelement 22 gewandt. Dadurch resultiert die Spaltbreite s1 in der geschlossenen Position.

Die in der Figur 10 obere Seite der Schwenkachse 18 ist in der geöffneten Position zum Stangenelement 22 gewandt. Daraus resultiert die Spaltbreite s2 in der geöffneten Position, wobei gilt s2 > s1.

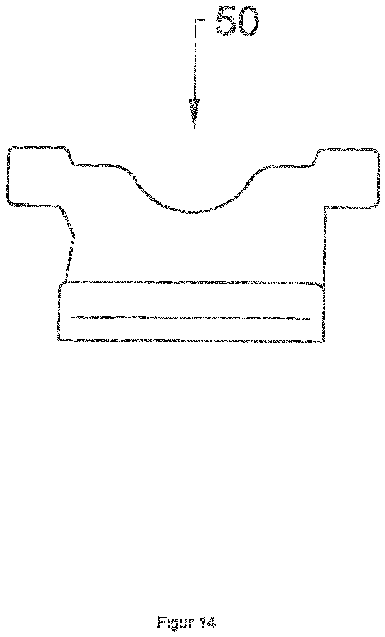

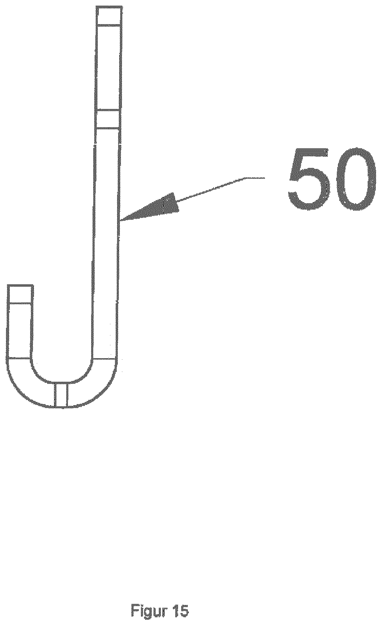

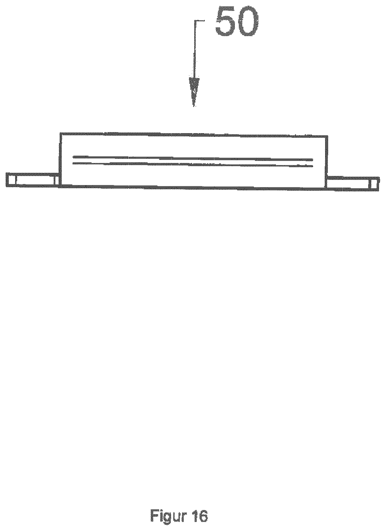

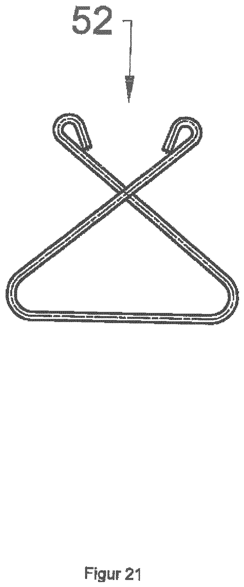

Mittels der in den Figuren 14 bis 16 gezeigten Verriegelungseinrichtung 50 und der in der Figur 21 gezeigten Feder 52 lässt sich das Handhabungsteil 20 in der geschlossenen Position verriegeln. Die Seitenwände 14 und 16 des Schnallenkörpers 12 weisen dazu abgewinkelte Abschnitte 54 auf, die mit Ausnehmungen 56 verbunden sind, so dass, wenn das Handhabungsteil 20 von der geöffneten Position in die geschlossene Position bewegt wird, die durch die Feder 52 vorgespannte Verriegelungseinrichtung 50 mit den abgewinkelten Abschnitten 54 der Seitenwände 14 und 16 in Kontakt gerät und in eine zweite Position abgelenkt wird, wodurch sie die abgewinkelten Abschnitte 54 der Seitenwände 14 und 16 umgeht und in den Ausnehmungen 56 aufgenommen wird.

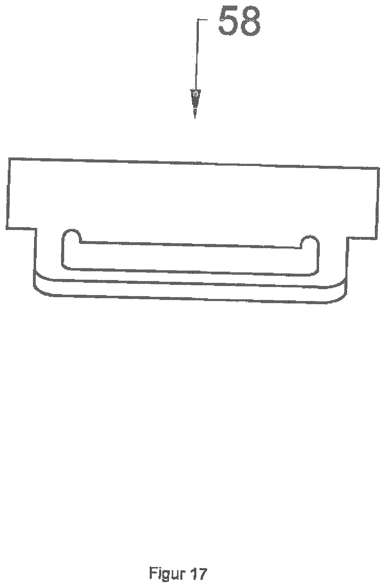

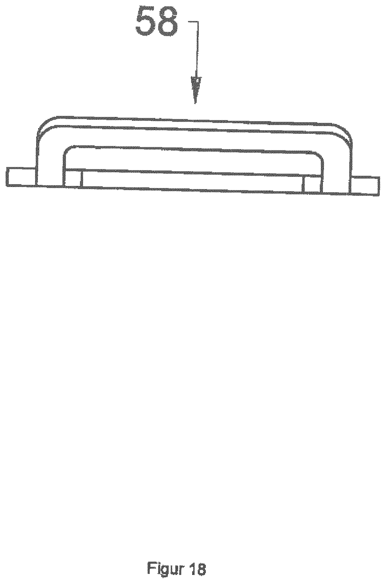

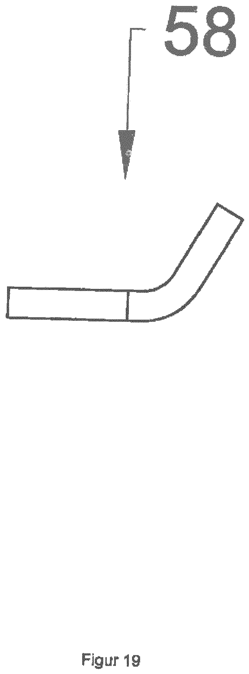

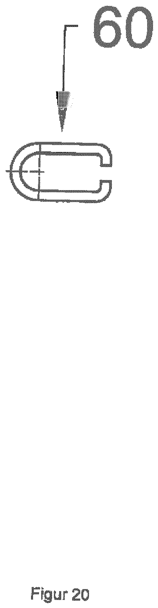

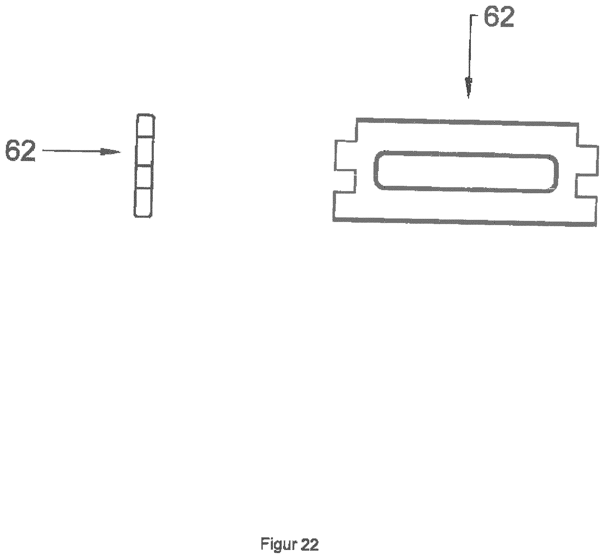

Die Figuren 17 bis 19 zeigen eine Rückplatte 58 und die Figur 20 zeigt einen Kantenschutz 60. Schließlich zeigt die Figur 22 eine Frontplatte 62.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

**Bezugszeichenliste**

| | | | |
|---|---|---|---|
| 10 | Umleg-Schnalle | d_{E} | Durchmesser |
| 12 | Schnallenkörper | d_{M} | Durchmesser |
| 14, 16 | Seitenwände | d_{S, M} | Durchmesser |
| 18 | Schwenkachse | d_{S, E} | Durchmesser |
| 20 | Handhabungsteil | L | Länge |
| 21 | Seitenwände | L_{E} | Länge |
| 22 | Stangenelement | L_{gesamt} | Länge |
| 23 | Aufnahmelöcher | L_{S, E1} | Länge |
| 24, 26 | Aufnahmelöcher | L_{S,gesamt} | Länge |
| 28 | Gurt | s | Seitenlänge |
| 30 | Oberfläche | s1 | Spaltbreite |
| 32 | Kreuzrändelung | s2 | Spaltbreite |
| 34 | Kästchen | t | Tiefe |
| 36 | Riefen | v | Versatz |
| 38, 40 | Enden | α | Winkel |
| 42 | Bereich | β | Innenwinkel |
| 44, 46 | Enden | | |
| 47 | Aufnahmelöcher | | |
| 48 | Abplattung | | |
| 49 | Bereich | | |
| 50 | Verriegelungseinrichtung | | |
| 52 | Feder | | |
| 54 | abgewinkelte Abschnitte | | |
| 56 | Ausnehmungen | | |
| 58 | Rückplatte | | |
| 60 | Kantenschutz | | |
| 62 | Frontplatte | | |

## Patentansprüche

1. Umleg-Schnalle (10), umfassend
- einen Schnallenkörper (12) mit voneinander beabstandeten Seitenwänden (14, 16),
- eine Schwenkachse (18), die sich zwischen den Seitenwänden (14, 16) des Schnallenkörpers (12) erstreckt, und
- ein Handhabungsteil (20) mit einem Stangenelement (22) und einem Paar Aufnahmelöchern (24, 26), wobei die Aufnahmelöcher (24, 26) konfiguriert sind, die Schwenkachse (18) aufzunehmen, um das Handhabungsteil (20) mit dem Schnallenkörper (12) so in Eingriff zu bringen, dass das Handhabungsteil (20) zwischen einer geöffneten Position, in der ein Gurt (28) durch einen Spalt mit einer Spaltbreite s2 zwischen der Schwenkachse (18) und dem Stangenelement (22) in das Handhabungsteil (20) eingefädelt werden kann, und einer geschlossenen Position, in der Spannung auf den in das Handhabungsteil (20) eingefädelten Gurt (28) ausgeübt werden kann, schwenkbar ist,
wobei ein Spiel zwischen der Schwenkachse (18) und dem Handhabungsteil (20) in der geschlossenen Position besteht,
**dadurch gekennzeichnet,**
**dass** das Stangenelement (22) einen mittleren Bereich mit einem kreisrunden Querschnitt aufweist, und dass die Schwenkachse (18) exzentrisch angeordnete Lagerenden aufweist, um in der geschlossenen Position, in der der Spalt zwischen der Schwenkachse (18) und dem Stangenelement (22) eine Spaltbreite s1 aufweist, wobei die Spaltbreite s1 kleiner als die Spaltbreite s2 ist, eine Klemmung des Gurtes zwischen der Schwenkachse (18) und dem Stangenelement (22) zu bewirken.

2. Umleg-Schnalle (10) nach Anspruch 1, wobei das Stangenelement (22) eine mit einem, insbesondere dreidimensionalen, Muster versehene Oberfläche (30) aufweist.

3. Umleg-Schnalle (10) nach Anspruch 1, wobei das Muster durch eine spanabhebende Bearbeitung, insbesondere Fräsen, hergestellt ist.

4. Umleg-Schnalle (10) nach Anspruch 2 oder 3, wobei das Muster durch eine spanlose Bearbeitung, insbesondere Umformen, wie z. B. Kaltumformen, hergestellt ist.

5. Umleg-Schnalle (10) nach einem der Ansprüche 2 bis 4, wobei das Muster eine Rändelung ist.

6. Umleg-Schnalle (10) nach Anspruch 5, wobei die Rändelung eine Kreuzrändelung (32) ist.

7. Umleg-Schnalle (10) nach Anspruch 6, wobei die Rändelung eine Kreuzrändelung (32) unter einem Winkel im Bereich von ca. 30° bis ca. 60° und besonders bevorzugt unter einem Winkel α von 45° zur Längsachse des Stangenelements (22) ist.

8. Umleg-Schnalle (10) nach Anspruch 7, wobei die Kreuzrändelung (32) Kästchen (34) mit einer Seitenlänge s im Bereich von ca. 1 mm bis ca. 2 mm, bevorzugt von 1,5 mm aufweist.

9. Umleg-Schnalle (10) nach einem der Ansprüche 5 bis 8, wobei die Rändelung Riefen (36), die einen Profilwinkel β, der im Bereich von ca. 60° bis ca. 120°, bevorzugter im Bereich von ca. 80° bis ca. 100° liegt und am bevorzugtesten ca. 90° beträgt, und/oder eine Tiefe t, die im Bereich von ca. 0,2 mm bis ca. 1 mm, bevorzugter im Bereich von ca. 0,3 mm bis ca. 0,8 mm liegt und am bevorzugtesten ca. 0,5 mm beträgt, aufweist.

10. Umleg-Schnalle (10) nach einem der Ansprüche 5 bis 9, wobei die Rändelung eine Teilung aufweist, die im Bereich von ca. 1 mm bis ca. 2 mm, bevorzugter im Bereich von ca. 1,2 mm bis ca. 1,8 mm und am bevorzugtesten im Bereich von ca. 1,5 mm bis ca. 1,6 mm liegt.

11. Umleg-Schnalle (10) nach einem der Ansprüche 5 bis 10, wobei die Rändelung erhöhte oder vertiefte Spitzen aufweist.

## Claims

1. Folding buckle (10), comprising
- a buckle body (12) having spaced-apart side walls (14, 16),
- a pivot pin (18) which extends between the side walls (14, 16) of the buckle body (12), and
- a handling part (20) having a bar element (22) and a pair of receiving holes (24, 26), wherein the receiving holes (24, 26) are configured to receive the pivot pin (18) in order to bring the handling part (20) into engagement with the buckle body (12) such that the handling part (20) is pivotable between an open position, in which a strap (28) can be threaded into the handling part (20) through a gap with a gap width s2 between the pivot pin (18) and the bar element (22), and a closed position, in which tension can be applied to the strap (28) threaded into the handling part (20),
wherein there is play between the pivot pin (18) and the handling part (20) in the closed position,
**characterized**
**in that** the bar element (22) has a central region with a circular cross section, and in that the pivot pin (18) has eccentrically arranged bearing ends, in order, in the closed position, in which the gap between the pivot pin (18) and the bar element (22) has a gap width s1, wherein the gap width s1 is smaller than the gap width s2, to effect clamping of the strap between the pivot pin (18) and the bar element (22).

2. Folding buckle (10) according to Claim 1, wherein the bar element (22) has a surface (30) provided with a pattern, in particular a three-dimensional pattern.

3. Folding buckle (10) according to Claim 1, wherein the pattern has been produced by machining, in particular milling.

4. Folding buckle (10) according to Claim 2 or 3, wherein the pattern has been produced by non-cutting processing, in particular forming, such as cold forming, for example.

5. Folding buckle (10) according to one of Claims 2 to 4, wherein the pattern is knurling.

6. Folding buckle (10) according to Claim 5, wherein the knurling is cross knurling (32).

7. Folding buckle (10) according to Claim 6, wherein the knurling is cross knurling (32) at an angle in the range from about 30° to about 60° and particularly preferably at an angle α of 45° to the longitudinal axis of the bar element (22).

8. Folding buckle (10) according to Claim 7, wherein the cross knurling (32) has squares (34) with a side length s in the range from about 1 mm to about 2 mm, preferably of 1.5 mm.

9. Folding buckle (10) according to one of Claims 5 to 8, wherein the knurling has flutes (36) with a profile angle β which is in the range from about 60° to about 120°, more preferably in the range from about 80° to about 100°, and is most preferably about 90°, and/or with a depth t which is in the range from about 0.2 mm to about 1 mm, more preferably in the range from about 0.3 mm to about 0.8 mm, and is most preferably about 0.5 mm.

10. Folding buckle (10) according to one of Claims 5 to 9, wherein the knurling has a pitch which is in the range from about 1 mm to about 2 mm, more preferably in the range from about 1.2 mm to about 1.8 mm, and most preferably in the range from about 1.5 mm to about 1.6 mm.

11. Folding buckle (10) according to one of Claims 5 to 10, wherein the knurling has raised or recessed vertices.

## Revendications

1. Boucle à retournement (10), comprenant
- un corps de boucle (12) avec deux parois latérales (14, 16) espacées l'une de l'autre,
- un axe de pivotement (18), qui s'étend entre les parois latérales (14, 16) du corps de boucle (12), et
- une partie de manipulation (20) avec un élément de tige (22) et une paire de trous de logement (24, 26), dans laquelle les trous de logement (24, 26) sont configurés de façon à recevoir l'axe de pivotement (18), afin d'engager la partie de manipulation (20) avec le corps de boucle (12) de telle manière que la partie de manipulation (20) puisse pivoter entre une position ouverte, dans laquelle une ceinture (28) peut être enfilée dans la partie de manipulation (20) à travers une fente avec une largeur de fente s2 entre l'axe de pivotement (18) et l'élément de tige (22), et une position fermée, dans laquelle une contrainte peut être exercée sur la ceinture (28) enfilée dans la partie de manipulation (20),
dans laquelle il existe dans la position fermée un jeu entre l'axe de pivotement (18) et la partie de manipulation (20),
**caractérisée en ce que** l'élément de tige (22) présente une région centrale de section transversale ronde, et **en ce que** l'axe de pivotement (18) présente des extrémités de palier disposées de façon excentrique, afin de provoquer dans la position fermée, dans laquelle la fente entre l'axe de pivotement (18) et l'élément de tige (22) présente une largeur de fente s1, la largeur de fente s1 étant plus petite que la largeur de fente s2, un serrage de la ceinture entre l'axe de pivotement (18) et l'élément de tige (22).

2. Boucle à retournement (10) selon la revendication 1, dans laquelle l'élément de tige (22) présente une surface (30) dotée d'un motif, en particulier tridimensionnel.

3. Boucle à retournement (10) selon la revendication 1, dans laquelle le motif est produit par un usinage avec enlèvement de copeaux, en particulier par fraisage.

4. Boucle à retournement (10) selon une revendication 2 ou 3, dans laquelle le motif est produit par un usinage sans enlèvement de copeaux, en particulier par déformation, comme par exemple par déformation à froid.

5. Boucle à retournement (10) selon l'une quelconque des revendications 2 à 4, dans laquelle le motif est un moletage.

6. Boucle à retournement (10) selon la revendication 5, dans laquelle le moletage est un moletage croisé (32) .

7. Boucle à retournement (10) selon la revendication 6, dans laquelle le moletage est un moletage croisé (32) sous un angle compris dans la plage d'environ 30° à environ 60° et de préférence encore sous un angle α de 45° par rapport à l'axe longitudinal de l'élément de tige (22).

8. Boucle à retournement (10) selon la revendication 7, dans laquelle le moletage croisé (32) présente des petits carreaux (34) avec une longueur de côté s comprise dans la plage d'environ 1 mm à environ 2 mm, de préférence de 1,5 mm.

9. Boucle à retournement (10) selon l'une quelconque des revendications 5 à 8, dans laquelle le moletage présente des stries (36), qui présentent un angle de profil β, qui se situe dans la plage d'environ 60° à environ 120°, de préférence dans la plage d'environ 80° à 100°, et qui vaut de préférence encore environ 90°, et/ou une profondeur t, qui se situe dans la plage d'environ 0,2 mm à environ 1 mm, de préférence dans la plage d'environ 0,3 mm à environ 0,8 mm, et qui vaut de préférence encore environ 0,5 mm.

10. Boucle à retournement (10) selon l'une quelconque des revendications 5 à 9, dans laquelle le moletage présente un pas, qui se situe dans la plage d'environ 1 mm à environ 2 mm, de préférence dans la plage d'environ 1,2 mm à environ 1,8 mm, et de préférence encore dans la plage d'environ 1,5 mm à 1,6 mm.

11. Boucle à retournement (10) selon l'une quelconque des revendications 5 à 10, dans laquelle le moletage présente des pointes surélevées ou creusées.
